# FASCICULE DE BREVET EUROPEEN

(11) **EP 1 540 788 B1**
(45) Date de publication et mention de la délivrance du brevet: **03.05.2006**
(21) Numéro de dépôt: 03773785.5
(22) Date de dépôt: 16.09.2003
(51) Int. Cl.: H02B 5/06

(54) **AGENCEMENT DE COUPURE DE JEU DE BARRES DANS UN POSTE SOUS ENVELOPPE METALLIQUE**
SAMMELSCHIENENSCHALTUNG IN EINER METALLGEKAPSELTEN SCHALTANLAGE
CUT-OFF ARRANGEMENT FOR A SET OF BARS IN AN ITEM WHICH IS COVERED WITH A METAL PROTECTION

(30) Priorité: 20.09.2002 FR 0211642
(43) Date de publication de la demande: 15.06.2005
(73) Titulaire: AREVA T&D SA, 92084 Paris La Défense Cedex (FR)
(72) Inventeur: ARNAUD, Alain, F-73100 Aix-Les-Bains (FR); PERROUSE, Jean-Marc, F-73330 Domessin (FR); FONTANA, Eric, F-73160 Cognin (FR)
(74) Mandataire: Poulin, Gérard
(86) Numéro de dépôt international: PCT/FR2003/002731
(87) Numéro de publication internationale: WO 2004/027952

(56) Documents cités:
- DE-A- 2 646 617

## Description

La présente invention concerne un agencement de coupure de jeu de barres dans un poste sous enveloppe métallique dit couramment poste blindé.

Dans un poste triphasé, chaque jeu de barres comporte trois barres conductrices et ces jeux de barres relient des appareillages électriques, tels que des traversées aériennes ou des boîtes à câbles. Chaque barre conductrice est équipée aux endroits nécessaires de disjoncteurs assurant la coupure en charge et chaque disjoncteur est associé à chacune de ses bornes à un sectionneur assurant la coupure à vide.

Dans un agencement de coupure connu, si l'on ne considère qu'une seule barre, le disjoncteur est disposé dans un premier plan parallèle au sol et est connecté à une boîte de mécanisme de commande. Par une barrette conductrice, dite virole, verticale, la borne d'entrée du disjoncteur est reliée à l'extrémité de la barre d'entrée disposée dans un second plan parallèle au et au-dessus du premier plan, cette barre étant perpendiculaire à l'axe longitudinal du disjoncteur. Un sectionneur, dit sectionneur d'entrée, est monté entre disjoncteur et extrémité de la barre d'entrée.

La barre de sortie est, du fait de contraintes dimensionnelles et de la présence d'autres appareillages électriques, alignée à la barre d'entrée. Son extrémité est donc reliée, via un sectionneur dit de sortie, à la borne de sortie du disjoncteur par l'intermédiaire de plusieurs viroles reliées les unes aux autres par des croix de jonction. Plus précisément ces viroles sont au moins au nombre de trois, perpendiculaires les unes aux autres. En partant de la borne de sortie du disjoncteur, une première virole verticale reliée à la borne de sortie du disjoncteur et passant du premier plan au second plan, une deuxième virole dans le second plan et parallèle aux barres et une troisième virole dans le second plan et perpendiculaire aux barres et connectée à l'extrémité de la barre de sortie.

Ce type d'agencement de coupure pose le problème technique suivant. Il nécessite un nombre important de pièces annexes, viroles et croix de jonction, dont le montage est long et onéreux.

Par ailleurs, le document de brevet DE 26 46 617 décrit une installation de coupure de type totalement différent plus précisément de type dit « 1 ½ », dont l'axe longitudinal des organes de coupure est incliné par rapport aux axes longitudinaux des barres.

L'invention permet de supprimer certaines de ces pièces annexes et d'optimiser leur nombre.

Pour ce faire, elle propose un agencement de coupure d'une barre conductrice sous enveloppe métallique présentant les caractéristiques énoncées à la revendication 1.

De préférence, l'organe de coupure est un disjoncteur et l'élément de connexion électrique est un sectionneur.

L'invention concerne également un agencement de coupure d'un jeu de barres conductrices superposées sous enveloppe métallique dans un poste multiphasé, caractérisé en que chaque barre est équipée d'un agencement comme précisé ci-dessus et en ce qu'au moins lesdits éléments de connexion électrique d'une barre sont reliés au disjoncteur correspondant par au moins une virole verticale.

L'invention concerne également un poste multiphasé comportant au moins deux tels agencements de coupure de jeux de barres, caractérisé en ce que lesdits agencements sont symétriques par rapport au plan médian entre les deux jeux de barres.

L'invention concerne enfin un poste multiphasé comportant au moins deux tels agencements de coupure de jeux de barres, caractérisé en ce que lesdits agencements ont leurs éléments constitutifs parallèles.

L'invention est décrite ci-après plus en détail à l'aide de figures ne représentant qu'un mode de réalisation préféré de l'invention.
La figure 1 est une représentation schématique d'un agencement de coupure d'une barre conductrice sous enveloppe métallique selon l'invention.
La figure 2 est une vue en perspective d'un agencement de coupure d'un jeu de barres conductrices sous enveloppe métallique, dans un poste triphasé.
La figure 3 est une vue de dessus du même agencement.
La figure 4 est une vue partielle de dessus d'un poste triphasé comportant deux tels agencements de coupure de jeux de barres.

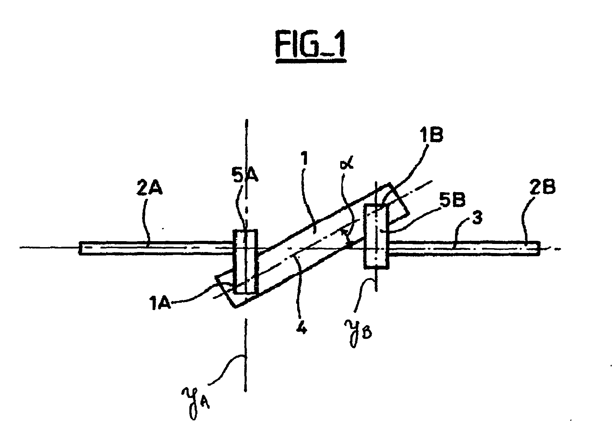

La figure 1 est donc une représentation schématique d'un agencement de coupure d'une barre conductrice sous enveloppe métallique.

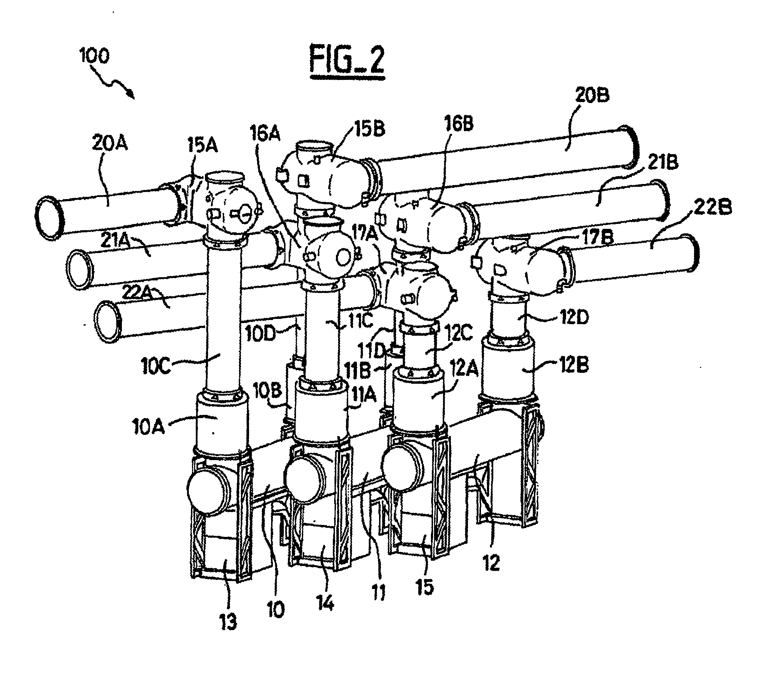

Cet agencement comporte un organe de coupure 1 bipolaire, de préférence un disjoncteur, disposé dans un premier plan parallèle au sol et dont la borne d'entrée 1A est reliée à l'extrémité de la partie de barre d'arrivée 2A et dont la borne de sortie 1B est reliée à l'extrémité de la partie de barre de sortie 2B. Ces deux parties de barre 2A, 2B, dites barre d'arrivée et barre de sortie, sont alignées sur un axe 3, dit axe de barre, dans un second plan parallèle et superposé au premier plan. Ces différents plans seront visibles sur la figure 2 qui est une vue en perspective.

L'axe longitudinal 4 de l'enveloppe métallique du disjoncteur 1 est incliné d'un angle α par rapport à la projection perpendiculaire de l'axe de barre 3 sur le premier plan. Chaque barre 2A, 2B est prolongée par un élément de connexion électrique 5A, 5B, de préférence un sectionneur, disposé dans le second plan et dont l'extrémité vient au droit de la borne d'entrée 1A et de la borne de sortie 1B du disjoncteur 1. Avantageusement, chaque sectionneur 5A, 5B est perpendiculaire à la partie de barre correspondante 2A, 2B.

A titre d'exemple, l'angle α peut être de l'ordre de 30°, mais sa valeur dépend de la distance entre borne d'entrée et borne de sortie du disjoncteur 1 et de chaque sectionneur 5A, 5B utilisés.

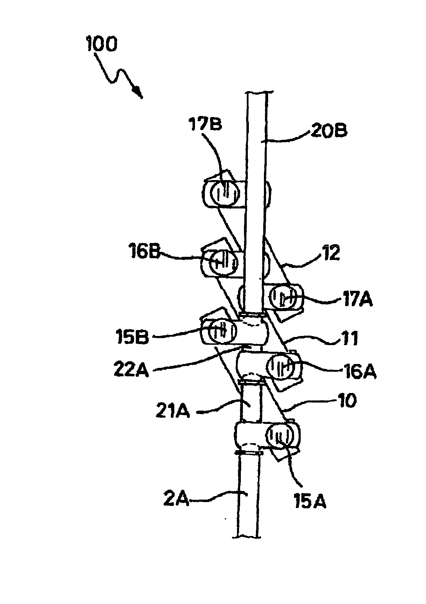

Plus précisément, la direction de l'axe longitudinal (4) est inclinée par rapport à la direction de l'axe de barre 3. Chacun des sectionneurs 5A, 5B prolonge chaque partie de barre 2A, 2B et possède un axe longitudinal y_{A}, y_{B} définissant avec l'axe de barre 3 un plan sensiblement parallèle à l'axe longitudinal 4 de l'organe de coupure 1 et étant perpendiculaire à l'axe de barre. Les droites définies chacune par une borne 1A, 1B du disjoncteur et par une extrémité d'un des sectionneurs 5A, 5B qui prolonge une partie de barre 2A, 2B correspondant à la borne sont sensiblement perpendiculaires au plan en question.Sur les figures 2 et 3, sont représentés en perspective trois agencements du type précédent formant un agencement de coupure 100 d'un jeu de barres conductrices sous enveloppe métallique, dans un poste triphasé. Dans un tel poste, les appareillages électriques sont sous enveloppe métallique et isolés au gaz diélectrique, par exemple du SF6.

Selon ce mode de réalisation, les éléments identiques de tous les agencements de coupure de chaque barre sont parallèles.

Dans un premier plan parallèle au sol, sont disposés trois disjoncteurs sous enveloppe métallique 10, 11, 12 supportés sur des châssis qui portent également les dispositifs de commande respectifs 13, 14, 15. Borne d'entrée et borne de sortie de chaque disjoncteur sont connectées respectivement à un transformateur de courant sous enveloppe métallique 10A et 10B, 11A et 11B, 12A et 12B d'axe longitudinal vertical. Chaque transformateur de courant est prolongé d'une virole verticale sous enveloppe métallique 10C et 10D, 11C et 11D, 12C et 12D. Les deux viroles d'un couple correspondant au même disjoncteur sont de longueur identique mais, par contre, les différents couples sont de longueur différente, afin d'obtenir une superposition des jeux de barres, comme il sera vu plus loin. Eventuellement, le couple de viroles le plus court 12A et 12B peut même être supprimé.

A l'extrémité supérieure de chaque virole d'un couple, est montée et connectée une borne d'un sectionneur sous enveloppe métallique 15A et 15B, 1 6A et 16B, 17A et 17B, soit un couple de sectionneurs par disjoncteur. A l'autre borne de ces sectionneurs, est connectée l'extrémité des barres, soit un couple de barres, l'une d'arrivée 20A, 21A, 22A et l'autre de sortie 20B, 21B, 22B, pour chaque disjoncteur.

Toutes les barres d'arrivée 20A, 21A, 22A sont superposées dans un plan vertical et toutes les barres de sortie 20B, 21B, 22B sont superposées dans le même plan. Barre d'entrée et barre de sortie associées ou du même couple sont alignées.

Il apparaît clairement sur ces figures que la longueur de virole nécessaire pour réaliser un tel agencement de coupure de jeu de barres est minimisée.

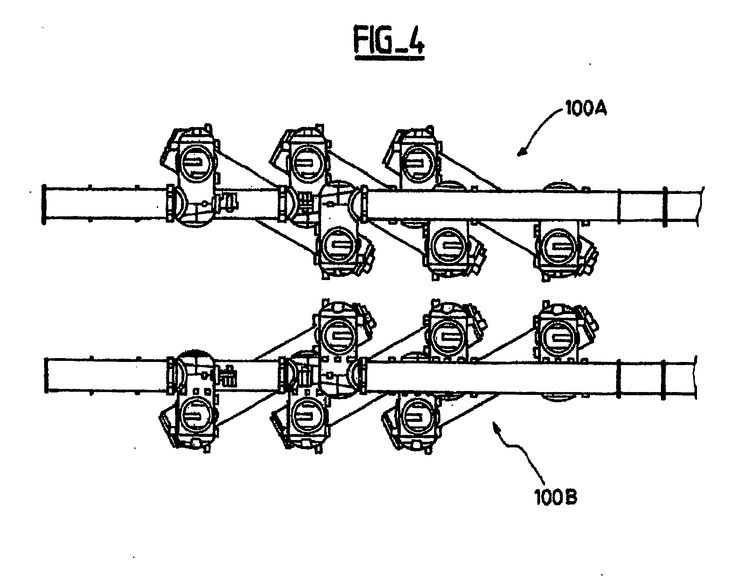

La figure 4 représente en vue de dessus un poste multiphasé comportant deux agencements de coupure 100A et 100B de jeux de barres, du même type que précédemment décrits.

Selon ce mode de réalisation, ces agencements 100A et 100B sont symétriques par rapport au plan médian entre les deux jeux de barres.

Sans modifier l'encombrement au sol ni l'emplacement des barres, ces agencements peuvent également être disposés avec tous leurs éléments constitutifs, dont leurs éléments de coupure, parallèlesselon une variante non représentée.

## Revendications

1. Agencement de coupure d'une barre conductrice sous enveloppe métallique,
ladite barre conductrice ayant une partie de barre d'arrivée (2A) et une partie de barre de sortie (2B) qui sont alignées sur un axe dit axe de barre (3),
ledit agencement de coupure comportant un organe de coupure (1) bipolaire permettant d'interrompre le passage du courant entre la partie de barre d'arrivée (2A) et la partie de barre de sortie (2B),
ledit organe de coupure (1) comportant une enveloppe métallique qui possède un axe longitudinal (4) dont la direction est sensiblement inclinée par rapport à la direction de l'axe de barre (3),
ledit organe de coupure (1) ayant une borne d'entrée (1A) et une borne de sortie (1B) qui sont respectivement reliées électriquement à la partie de barre d'arrivée (1A) et à la partie de barre de sortie (2B) par au moins un organe de connexion électrique,
chaque borne (1A, 1B) dudit organe de coupure et une extrémité de l'un desdits organes de connexion électrique (5A, 5B), qui prolonge une partie de barre (2A, 2B) correspondant à ladite borne (1A, 1B), définissant une droite qui est sensiblement perpendiculaire audit axe longitudinal (4),
chacun desdits organes de connexion électrique (5A, 5B), qui prolonge chaque partie de barre (2A, 2B), possédant un axe longitudinal (y_{A}, y_{B}) qui définit avec l'axe de barre (3) un plan sensiblement parallèle à l'axe longitudinal (4) dudit organe de coupure (1),
**caractérisé en ce que** ledit axe longitudinal (y_{A}, y_{B}) de chaque organe de connexion électrique (5A, 5B) est perpendiculaire audit axe de barre (3).

2. Agencement de coupure selon la revendication 1, **caractérisé en ce que** ledit organe de coupure (1) est un disjoncteur et ledit élément de connexion électrique (5A, 5B) est un sectionneur.

3. Agencement de coupure (100) d'un jeu de barres conductrices superposées sous enveloppe métallique dans un poste multiphasé, **caractérisé en ce que** chaque barre est équipée d'un agencement de coupure selon la revendication 1 ou la revendication 2, et **en ce qu'**au moins lesdits éléments de connexion électrique (5A, 5B) d'une barre sont reliés au disjoncteur correspondant par au moins une virole verticale.

4. Poste multiphasé comportant au moins deux agencements de coupure de jeux de barres selon la revendication 3, **caractérisé en ce que** lesdits agencements (100A, 100B) sont symétriques par rapport au plan médian entre les deux jeux de barres.

5. Poste multiphasé comportant au moins deux agencements de coupure de jeux de barres selon la revendication 3, **caractérisé en ce que** lesdits agencements ont leurs éléments constitutifs parallèles.

## Claims

1. Interrupting arrangement for interrupting conduction through a metal-clad busbar, said busbar having an inlet busbar portion (2A) and an outlet busbar portion (2B) aligned on an axis called the busbar axis (3), said interrupting arrangement having a two-pole interrupting member (1) making it possible to interrupt the passage of current between the inlet busbar portion (2A) and the outlet busbar portion (2B), said interrupting member (1) having a metal cladding with a longitudinal axis (4), whose direction is substantially inclined with respect to the direction of busbar axis (3), said interrupting member (1) having an inlet terminal (1A) and an outlet terminal (1B) respectively electrically connected to the inlet busbar portion (1A) and the outlet busbar portion (2B) by an electrical connection member, each terminal (1A, 1B) of said interrupting member and one end of said electrical connecting members (5A, 5B) extending a busbar portion (2A, 2B) corresponding to said terminal (1A, 1B), defining a straight line substantially perpendicular to said longitudinal axis (4), each of said electrical connection members (5A, 5B) extending each busbar portion (2A, 2B), having a longitudinal axis (Y_{A}, Y_{B}) defining with the busbar axis (3) a plane substantially parallel to the longitudinal axis (4) of said interrupting member (1), **characterized in that** said longitudinal axis (Y_{A}, Y_{B}) of each electrical connection member (5A, 5B) being perpendicular to said busbar axis (3).

2. Interrupting arrangement according to claim 1, **characterized in that** said interrupting member (1) is a circuit-breaker and said electrical connection element (5A, 5B) is a disconnector.

3. Interrupting arrangement (100) for a set of metal-clad busbars superposed in a multi-phase substation, said interrupting arrangement being **characterized in that** each busbar is equipped with an interrupting arrangement according to claim 1 or 2, and **in that** at least said electrical connection elements of a busbar are connected the corresponding circuit-breaker via at least one vertical ferrule.

4. Multi-phase substation including at least two interrupting arrangements for sets of busbars according to claim 3, **characterized in that** said arrangements (100A, 100B) are symmetrical with regard to the midplane between the two sets of busbars.

5. Multi-phase substation including at least two interrupting arrangements for sets of busbars, according to claim 3, **characterized in that** said arrangements have their component elements parallel.

## Patentansprüche

1. Anordnung zum Unterbrechen eines leitenden Stabs unter einer metallischen Hülle,
wobei der leitende Stab einen Eingangsstababschnitt (2A) und einen Ausgangsstababschnitt (2B), die auf eine sogenannte Stabachse (3) ausgerichtet sind, besitzt,
wobei die Unterbrechungsanordnung ein bipolares Unterbrechungsorgan (1) aufweist, das die Unterbrechung des Stromdurchgangs zwischen dem Eingangsstababschnitt (2A) und dem Ausgangsstababschnitt (2B) ermöglicht,
wobei das Unterbrechungsorgan (1) eine metallische Hülle aufweist, die eine Längsachse (4) besitzt, deren Richtung in Bezug auf die Richtung der Stabachse (3) wesentlich geneigt ist,
wobei das Unterbrechungsorgan (1) einen Eingangsanschluss (1A) und einen Ausgangsanschluss (1B) besitzt, die mit dem Eingangsstababschnitt (2A) bzw. mit dem Ausgangsstababschnitt (2B) durch wenigstens ein elektrisches Verbindungsorgan elektrisch verbunden sind,
wobei jeder Anschluss (1A, 1B) des Unterbrechungsorgans und ein Ende eines der elektrischen Verbindungsorgane (5A, 5B), das einen dem Anschluss (1A, 1B) entsprechenden Stababschnitt (2A, 2B) verlängert, eine Gerade definiert, die zu der Längsachse (4) im Wesentlichen senkrecht ist,
wobei jedes der elektrischen Verbindungsorgane (5A, 5B), die die jeweiligen Stababschnitte (2A, 2B) verlängern, eine Längsachse (y_{A}, y_{B}) besitzt, die mit der Stabachse (3) eine Ebene definiert, die zu der Längsachse (4) des Unterbrechungsorgans (1) im Wesentlichen parallel ist,
**dadurch gekennzeichnet, dass** die Längsachse (y_{A}, y_{B}) jedes elektrischen Verbindungsorgans (5A, 5B) zu der Stabachse (3) senkrecht ist.

2. Unterbrechungsanordnung nach Anspruch 1, **dadurch gekennzeichnet, dass** das Unterbrechungsorgan (1) ein Überlastschalter ist und das elektrische Verbindungselement (5A, 5B) ein Streckentrenner ist.

3. Unterbrechungsanordnung (100) für eine Gruppe leitender Stäbe, die in einer Vielphasenstation unter einer metallischen Hülle übereinander angeordnet sind, **dadurch gekennzeichnet, dass** jeder Stab mit einer Unterbrechungsanordnung nach Anspruch 1 oder nach Anspruch 2 versehen ist und dass wenigstens die elektrischen Verbindungselemente (5A, 5B) eines Stabs mit dem entsprechenden Überlastschalter durch wenigstens einen vertikalen Ringbeschlag verbunden sind.

4. Vielphasenstation, die wenigstens zwei Unterbrechungsanordnungen für Stabgruppen nach Anspruch 3 umfasst, **dadurch gekennzeichnet, dass** die Anordnungen (100A, 100B) in Bezug auf die Medianebene zwischen den zwei Stabgruppen symmetrisch sind.

5. Vielphasenstation, die wenigstens zwei Unterbrechungsanordnungen für Stabgruppen nach Anspruch 3 umfasst, **dadurch gekennzeichnet, dass** die konstitutiven Elemente der Anordnungen parallel sind.
